# EUROPEAN PATENT SPECIFICATION

(11) **EP 1 550 113 B1**
(45) Date of publication and mention of the grant of the patent: **10.01.2007**
(21) Application number: 03797391.4
(22) Date of filing: 08.08.2003
(51) Int. Cl.: G11B 7/08, G11B 7/09

(54) **OPTICAL DISC APPARATUS**
OPTISCHE DATENTRÄGERVORRICHTUNG
APPAREIL POUR DISQUE OPTIQUE

(30) Priority: 19.09.2002 EP 02078881
(43) Date of publication of application: 06.07.2005
(73) Proprietor: Koninklijke Philips Electronics N.V., 5621 BA Eindhoven (NL)
(72) Inventor: ROSMALEN, Gerard, E., NL-5656 AA Eindhoven (NL)
(74) Representative: van der Veer, Johannis Leendert
(86) International application number: PCT/IB2003/003287
(87) International publication number: WO 2004/027766

(56) References cited:
- US-A- 4 669 073
- US-A- 4 794 586
- US-A- 4 922 477
- PATENT ABSTRACTS OF JAPAN vol. 007, no. 234 (P-230), 18 October 1983 (1983-10-18) & JP 58 122630 A (MATSUSHITA DENKI SANGYO KK), 21 July 1983 (1983-07-21)
- PATENT ABSTRACTS OF JAPAN vol. 018, no. 121 (P-1700), 25 February 1994 (1994-02-25) & JP 05 307762 A (SONY CORP), 19 November 1993 (1993-11-19)

## Description

### BACKGROUND OF THE INVENTION

The present invention relates to an optical disc apparatus for recording and/or reproducing information on/from an information surface of a rotatable optical disc, corresponding to the pre-characterizing part of the annexed claim.

JP-A-58-122630 discloses an optical disc apparatus of the above kind having a rigid arm structure. The first pivoting means (focussing) comprise a pivot bearing and the second focussing means (scanning) comprise a roller bearing. Bearings of this kind require a number of separate relatively movable parts which are bulky and destroy the unitary nature of swing arm assembly. This makes the arrangement unsuitable for miniaturized solutions.

An optical disc apparatus of a different kind is known from US Patent No. 4,669,073. An optical disc apparatus is disclosed having a swing arm assembly in which the movable magnetic focussing means and the movable magnetic scanning means comprise two voice coils arranged at the free end of the swing arm assembly, whose windings are crossed to provide both focussing and scanning movements in cooperation with stationary permanent magnetic stator means. The swing arm assembly is pivotally movable about a swing axis which is the central axis of a stationary pivot. To focus the focussing lens, the arm assembly is flexed as a whole by the magnetic focussing force produced by the voice coils at the free end of the arm assembly.

Flexing the arm assembly as a whole for focussing purposes entails several disadvantages. To withstand the high acceleration and deceleration forces which are produced during scanning, the arm assembly should preferably be rigid in the direction of pivoting. Also, flexing of the swing arm assembly may upset the focussing assembly and associated optical means which should preferably be accurately aligned under all circumstances.

### SUMMARY OF THE INVENTION

It is therefore an object of the invention to provide a novel and useful optical disc apparatus of the kind refereed to in the introduction which is particularly suitable for miniaturization and which avoids the disadvantages of the prior art apparatus and has the characterizing features of the characterizing part of the appended claim.

Thus, the swing arm structure is entirely rigid and does not need to be flexed. The swing arm assembly is thus made eminently suitable for miniaturization, all elements of the optical system that need to be mounted in the swing arm assembly may be mounted at fixed relative positions. The first and second pivoting means may be specialized for their respective functions, resisting movements in any direction but the designed pivoting direction. At least the second pivoting means comprise leaf spring means. Such an arrangement is suitable for miniaturized swing arm assemblies, considering the small movements needed in the scanning direction.

### BRIEF DESCRIPTION OF THE DRAWINGS

The objects and features of the present invention will become more apparent by referring to the following non-limiting description of a preferred embodiment given with reference to the accompanying drawings in which:
Fig. 1 is a schematic plan view of an optical disc apparatus of miniaturized dimensions,
Fig. 2 is a schematic perspective fragmentary view of the optical disc apparatus of Fig. 1,
Fig. 3-5 are plan views of individual stator laminations of the combined motor and focussing/scanning stator of the optical disc apparatus of Fig. 1-2,
Fig.6 is a side view of a stack of stator laminations shown individually in Fig.3-5,
Fig.7 is a perspective view of the stacked stator laminations from Fig.6,
Fig. 8 is a fragmentary plan view illustrating alternative biasing means to bias a swing arm structure magnetically away from a spindle motor stator,
Fig.9 is a block diagram of the electronic circuitry for the course and fine control of the rigid swing arm focussing and scanning positions,
Fig. 10 is a schematic perspective view similar to Fig.2 but of an alternative embodiment of an optical disc apparatus and
Fig.11 is a perspective exploded view of the arrangement of electrical coils used to control the rigid swing arm scanning and focussing movements of the optical disc apparatus of Fig. 10.

### DETAILED DESCRIPTION OF THE PREFERRED EMBODIMENT

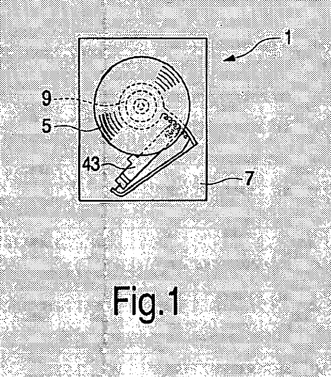

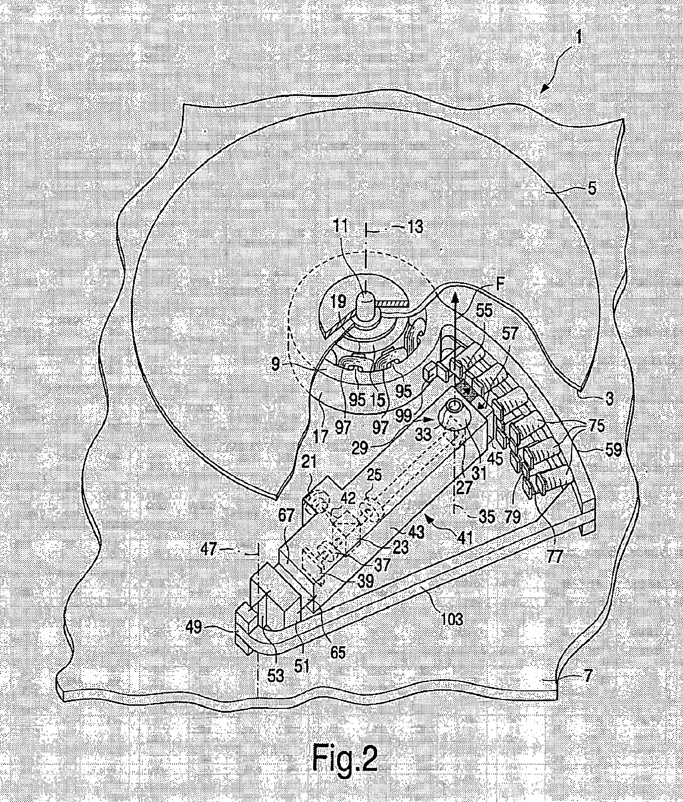

Referring to Fig.1 and 2 of the drawing, an optical disc apparatus 1 is shown for recording and/or reproducing information on/from an information surface 3 of a rotatable optical disc 5. The optical disc apparatus 1 is of miniaturized dimensions and is shown in Fig.1 to approximately true scale. The optical disc has a diameter in the order of approximately 23 mm.

The optical disc apparatus 1 comprises a supporting assembly 7 which in the embodiment shown is a printed circuit board measuring some 30 x 40 mm. A spindle motor 9 is associated with the supporting assembly 7 and has a spindle 11 with a spindle axis 13 for rotating the optical disc 5 mounted on the spindle 11 about the spindle axis 13. The spindle motor 9 comprises a permanent magnetic rotor 15 and a magnetic motor stator 17, magnetically cooperating with each other through an intermediate air gap 19.

Optical means are associated with the supporting assembly 7 for scanning the information surface 3 of the optical disc 1 mounted on the spindle 11. The optical means comprise a diode laser unit 21, a beam splitter 23, a collimator lens 25, a 90° reflecting element 27, a focussing lens assembly 29 comprising a lens mount 31 and a movable focussing lens 33 having a focussing axis 35, the focussing lens assembly 29 being movable in an axial direction along focussing axis 35. The optical means further comprise a so called servo lens 37 and a photo sensitive array 39. All these optical elements are well known to the man skilled in the art of optical disc apparatus and will not be explained in detail here. The photodiode laser unit 21 emits a laser beam 42 which is split by the beam splitter 33. Part of the beam is directed to the 90° reflecting element 27 and is shaped by the collimator lens. The laser beam is reflected by the 90° reflecting element 27 and projected through the focussing lens 33 onto the information surface 3 of the optical disc 5. The beam modulated by the data present in the rotating disc 5 is reflected by the information surface 3 and returns through the focussing lens 33, is reflected by the 90° reflecting element 27, passes through the collimator lens 25 and at least partly through the beam splitter 23 and impinges on the photo sensitive array 29. The output signals of the photo sensitive array 29 are output to electronics circuits to derive the data signals representing the data read out from the information surface 3 of the optical disc 5 and to extract the error signals needed to control the position and the movements of the optical assembly relative to the information surface 3 of the optical disc 5.

The optical assembly 21-39 described above is provided in a swing arm assembly 41 comprising a generally elongate swing arm structure 43 mounting the said focussing lens assembly 31-33 near a free end 45, the swing arm assembly 41 being pivotally rotationally movable about a swing axis 47 remote from said free end 45 and directed generally perpendicular to the swing arm structure 42 and generally parallel to the said spindle axis 13 and the said focussing axis 35 such that the swing arm assembly 41 rotationally sweeps a scanning plane generally parallel to the said information surface 3 of the mounted optical disc 5, the swing arm assembly thereby causing said focussing lens assembly 31-33 to scan over the information surface 3 of the mounted optical disc 5.

Rotational pivoting means 49-53 are provided for enabling the said rotational scanning movements of the swing arm assembly 41 and comprising stationary pivoting means 49 associated with the supporting assembly 7 and movable pivoting means 51 associated with the swing arm structure 43 pivotally cooperating with the stationary pivoting means 51. In the present embodiment the stationary pivoting means 49 and the rotational pivoting means 51 are permanently connected to each other by a deflectable leaf spring 53, which allows pivoting movements of the swing arm assembly 41 in the scanning direction parallel to the information surface 3 of the optical disc 5 only.

Movable magnetic scanning means 55-57 are provided at the free end of the swing arm assembly 41 for driving the swing arm assembly rotationally about its swing axis 47. In the present embodiment the movable magnetic scanning means comprises two adjacent permanent magnets 55 and 57 respectively which have been fixed on the free end of the swing arm structure 43 by suitable means such as an adhesive. The permanent magnets 55,57 are magnetized in parallel opposite directions (indicated by arrows in Fig.2) basically along a magnetic axis parallel to the general extension of the swing arm assembly 41.

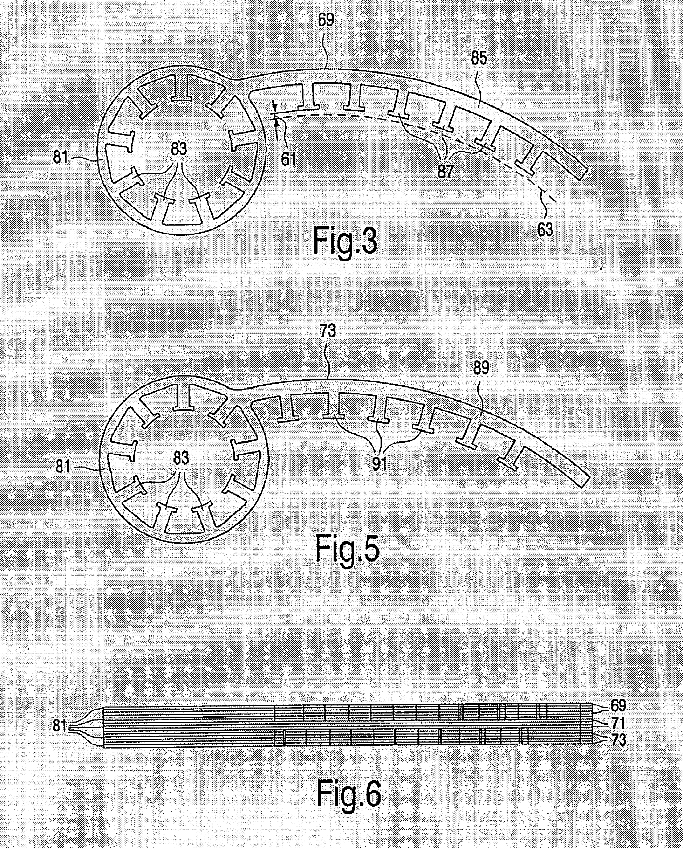

Stationary magnetic scanning means are provided associated with the supporting assembly 7 and comprising a magnetic scanning stator core 59 provided near and spaced from the free end of the swing arm assembly 41 for magnetically cooperating with the movable magnetic scanning means 55,57 through an intermediate air gap 61 disposed in a curved plane 63 (see more particularly Figure 3 which will be discussed below).

The embodiment of the invention shown in Figures 1-2 is of a kind in which the pivoting means 49-51 discussed above for enabling scanning movements of the swing arm assembly are second pivoting means, first pivoting means being provided for enabling focussing movements of the said focussing lens assembly 29. These first pivoting means resemble the already discussed second pivoting means in that they comprise a leaf spring 65 which is fixed to an end part 67 of the swing arm structure 43 on one side and to the movable pivoting means 51. The movable pivoting means 51 thus form an intermediate element between the two leaf springs 53 and 65. The leaf spring 65 is oriented such that it will allow movements of swing arm structure 41 such that the focussing lens 33 may move along the focussing axis 35 only.

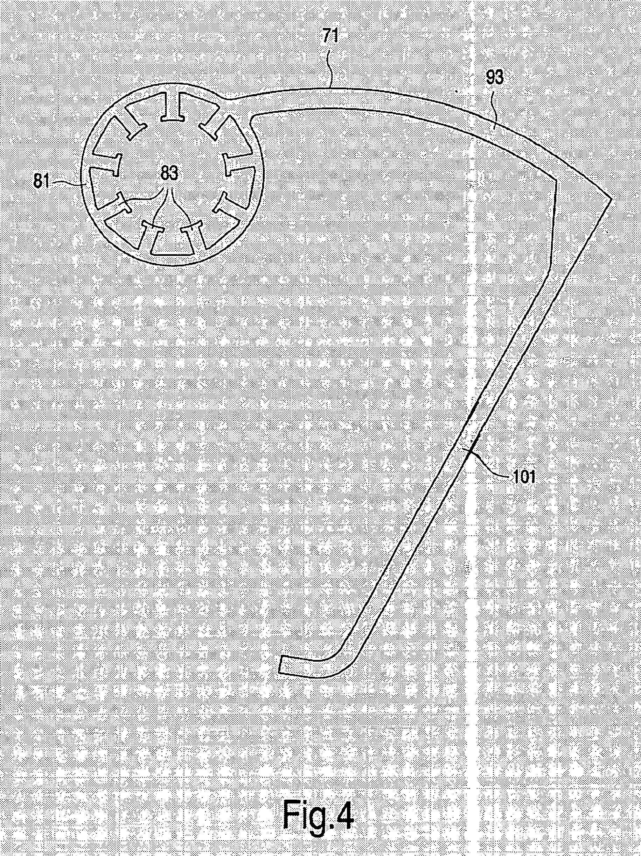

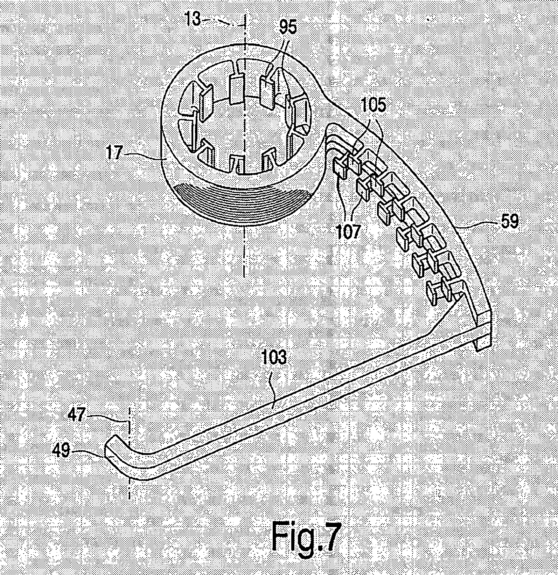

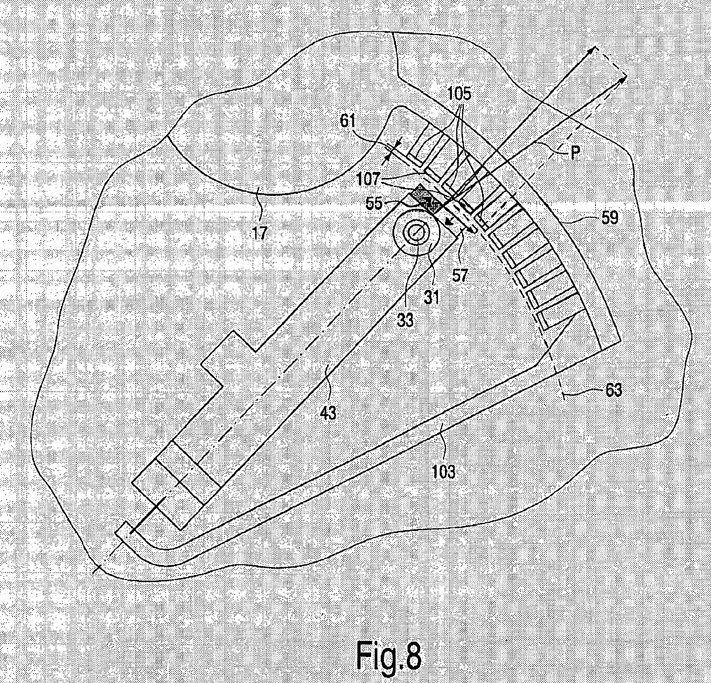

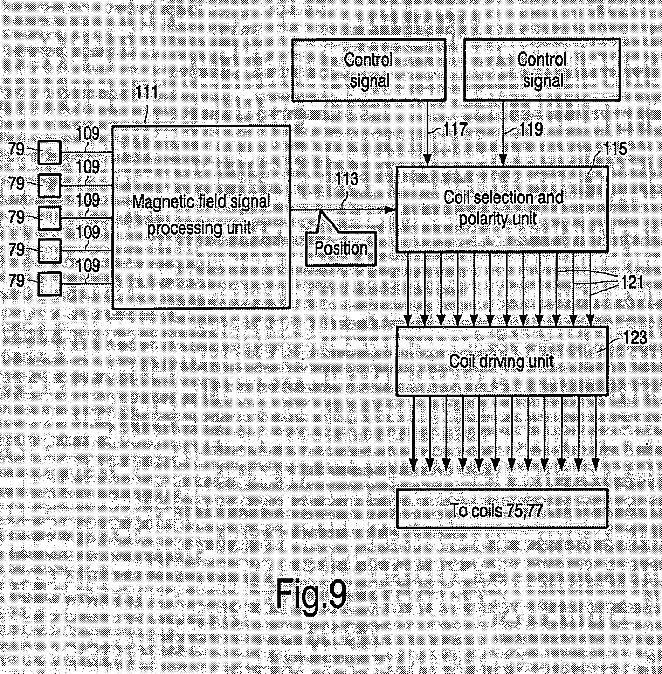

The movable magnetic scanning means 55-57 also operate as movable magnetic focussing means provided near the said free end 45 of the swing arm assembly 41 for driving the focussing lens 33 along the focussing axis 35 to focus the optical beam 42 on the optical disc information surface 3 and thus form combined movable magnetic focussing/scanning means 55-57. Stationary magnetic focussing means are present associated with the supporting assembly 7 for magnetically cooperating through the intermediate air gap 61 with the said combined movable magnetic focussing/scanning means 55-57 for generating a magnetic force vector having a vector component F parallel to the focussing axis 35 for driving the focussing lens assembly 29 along the focussing axis 35. These stationary magnetic focussing means are combined with the stationary magnetic scanning means and will be discussed below in connection with figures 2-8.

The swing arm structure 43 is rigid from the free end 45 up till at least near the swing axis 47 and the first pivoting means 51, 65, 67 are provided at or near the second pivoting means 49, 51, 53. The swing arm structure 43 is shown more particularly in Fig.2 as a box like structure housing the optical means 21-33, the lens mount 31 being a fixed element rigidly connected to the swing arm structure 43. However, alternative solutions may appear to the man skilled in the art. The swing arm structure could for example be shaped as rigid profiled beam carrying the optical means 21-33 on the outside. Part of the optical means could be located outside of the swing arm structure and communicate with the remaining means present on or in the swing arm structure through optical, electrical or other connections. The swing arm structure of the optical disc apparatus 1 of Fig. 1-2 has very small dimensions in the order of 2x2x16 mm.

A feature of the embodiment of the invention shown in Fig. 1-2 which is the subject matter of a co-pending application PHNL020897 (Applicant's identification number), having the same priority date as the present application and which is herewith incorporated in the present application by reference, is that the stationary magnetic scanning means or magnetic scanning stator core 59 is rigidly associated with the magnetic motor stator 17. In fact, in the embodiment of Fig. 1-2, the motor stator 17 and the scanning stator core 59 are integrated into a combined stationary unit. Also, the stationary pivoting means 49 are rigidly associated with the magnetic motor stator 17. In fact, the motor stator 17, the scanning stator core 59 and the stationary pivoting means 49 are all integrated into a combined stationary unit. As has been discussed before, with the embodiment according to Fig. 1-2, the stationary magnetic focussing means are combined with the stationary magnetic scanning means, so that in Fig.1-2 the motor stator, the scanning stator core, the stationary pivoting means and a focussing stator core are all integrated into a combined stationary unit

Referring now more particularly to Fig. 3-6, the combined stationary unit comprises a stator packet assembled from magnetisable individual stator laminations of three different kinds referred to by the reference numbers 69, 71 and 73 respectively. In the case of the embodiment of the invention according to Fig. 1-2, the movable magnetic scanning means comprise permanent magnetic rotationally movable scanning means 55,57 and the stationary magnetic scanning means comprise a number of individual stator coils 75 (six coils) arranged on the stator core 59 in a serial arrangement along the rotational scanning path of the movable permanent magnetic scanning means 55,57. Electronic commutating means are provided (to be discussed later) to selectively switch individual stator coils 75 on and off, scanning sensor means 79 (five sensors) being provided for detecting and scanning control means (to be discussed later) being provided for controlling the rotational position of the arm structure 43 respectively by controlling the current amplitude and direction in each of the stator coils 75 which has been selectively switched on in order to control the rotational arm position and movements.

In the embodiment of the invention according to fig.1-2 the movable magnetic focussing means comprise permanent magnetic axially movable focussing means also comprised of the permanent magnets 55,57, the stationary magnetic scanning means and the stationary magnetic focussing means comprising a number of individual stator coils 75 (six coils) and 77 (six coils) arranged on the stator core in a serial arrangement along the rotational scanning path of the movable permanent magnetic scanning means 55,57 and distributed over two axially spaced levels. Focussing sensor means are provided in the photo sensitive array 39 for detecting the focussing position of the focussing lens 33 in the usual way. Focussing control means and scanning control means (to be discussed later on) are provided for controlling the axial focussing lens 33 position and the angular position of the swing arm assembly 41 respectively by controlling the current amplitude and direction in each of the stator coils 75,77 which have been selectively switched on in order to control the axial focussing lens position and movements. The stator coils 75,77 in each of the two levels are spaced at a constant pitch on the stator core 59 along the path rotationally swept by the movable magnetic scanning means and movable magnetic focussing means 55,57. The stator coils 75,77 in the two levels are arranged in planes parallel to the scanning plane of the scanning arm structure and the stator coils 75 present in one level are positioned between the stator coils 77 present in the other level.

Figures 3-6 illustrate how both the motor stator core 17 of the spindle motor 9 and the scanning stator core 59 of the stationary magnetic scanning/focussing means may be assembled from individual stator laminations 69, 71 and 73. As customary, the stator laminations consist of individual parts stamped from soft iron plate material, covered on both sides with an electrically isolating coating or film to prevent eddy currents from flowing between the individual laminations. Each of the laminations 69-73 is provided with an annular part 81 provided with inwardly projecting angularly evenly spaced teeth parts. Stator plates 69 are provided with a curved part 85 extending from and integral with the annular part 81 and provided with mutually evenly spaced teeth parts 87. Stator plates 73 are similarly configured with a curved part 89 having teeth parts 91 at offset positions from the teeth parts 87 but having the same mutual spacing or pitch.

Stator plates 73 are provided with a curved part 93 configured similarly to curved parts 85 and 89 but not having teeth parts. The combined spindle motor/scanning stator is assembled by stacking for example six of the laminations 69 on three laminations 71 on six laminations 73, the teeth parts 83, 87 and 91 thus forming eight stator teeth 95 for eight motor stator coils 97, as well as six teeth for the six coils 75 and six teeth for the six coils 77 for the scanning stator core 59 respectively. The axial separation of the two rows of coils 75,77 being provided by the intermediate laminations 93.

Biasing means 99 formed by a small permanent magnet are provided to bias the magnetic attraction force produced between the movable permanent magnetic scanning/focussing means 55,57 and the motor stator 17, whereby magnetic adhesion of the scanning arm structure 43 to the motor stator 17 is prevented in a rotationally extreme position of the scanning arm structure 43 nearest to the spindle motor 9. The magnetic field of the permanent magnet 99 interacts with the magnetic fields of the permanent magnets 55,57 in a repellant way such, that the scanning arm structure 43 will be prevented to adhere magnetically to the spindle motor 9.

In the optical disc apparatus 1 according to the embodiment of Fig.1-2, the motor stator 17, the scanning/focus-sing stator core 59, as well as the stationary pivoting means 49 are all integrated into a combined stationary unit. Referring now more particularly to Fig. 3-7, to this end the laminations 71 are provided with a further extension 101 at the free end of the curved part 93 and at an appropriate angle to the curved part 93 of for example approximately 90°. The stacked extensions 101 of the laminations 71 form a supporting beam while the stacked laminations 69 and 73 form the mutually offset stator teeth 105 and 107 respectively of the scanning stator core 59. The way of securing the leaf springs 53 and 65 between the swing arm structure 43 and the rotating pivoting means 51 and between the pivoting means 51 and the stationary pivoting means 49 at the free end of the supporting beam 103 respectively has been shown in Fig. 1-2 only schematically. The leaf springs could be secured by any of a variety of methods known to the man skilled in the art such as by adhesive means, laser welding, spot welding, mechanical clamping, by screws or rivets, etc.

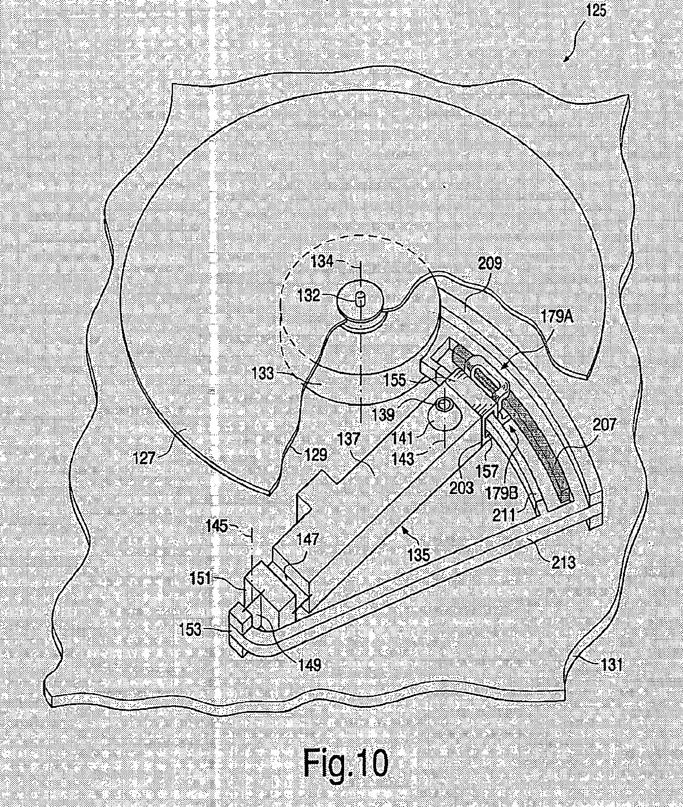

Fig. 8 is illustrative of an embodiment of the invention which has been slightly modified in comparison with the embodiment of Fig. 1 -7. Only details will be discussed which are typical of this modified embodiment. With this modified embodiment the biasing means 99 are no longer required. Instead, the biasing means are provided by one or more stator teeth 105,107 on the scanning stator core 59, positioned in such a way that in the said extreme rotational position of the scanning arm structure 43 the rotational magnetic pull of the said one or more stator teeth 105,107 on the rotating permanent magnetic scanning means 55,57 exceeds the rotational magnetic pull of the motor stator 17. This is accomplished by widening the air gap 61 between stator teeth 55,57 and the rotating permanent magnetic scanning means 55,57 in the vicinity of the motor stator 17. As a result, the magnetic pull P exerted by the stator teeth 55,57 will exceed the magnetic pull of the motor stator 17 in any position of the swing arm structure 43.

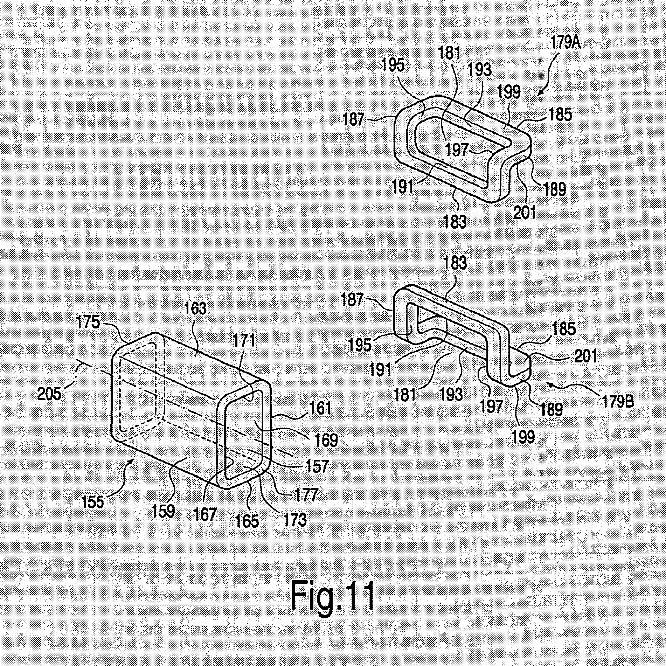

Referring now to the block diagram of Fig.9, a brief discussion will be given regarding the electronic course and fine control of the rigid swing arm angular and focussing positions. The five magnetic field sensors 79, for example of the Hall sensor type or any other suitable type, sense the magnetic fields of the movable permanent magnetic scanning/focussing means 55,57 and produce electrical magnetic field signals 109 representative of the magnetic field strength and direction sensed. The five signals 109 are input to a magnetic field signal processing unit 111 in which the swing arm angular and focussing position is determined. From this unit a swing arm position signal is output which is input to a coil selection and polarity unit 115. Also input to the coil selection and polarity unit are a focus control signal and tracking control signal 119. These signals are derived from the focus control and tracking control signals provided by the control circuitry (not shown) connected to the photosensitive array 39 which may be largely conventional. The focus control and tracking control signals are used for the fine controlling of the position of the laser beam spot produced by the focussing lens 33 relative to a track of the information surface 3 of the optical disc 5 of the optical disc apparatus 1. The coil selection and polarity unit 115 has twelve outputs 121, one connected to each of the twelve coils 75, 77 of the stationary magnetic scanning means. The operation of the coil selection and polarity unit during normal operation of the optical disc apparatus 1 is such that only the coils are selected that are actively needed for the fine controlling of the swing arm position relative to the nominal current position of the swing arm relative to the tracks in the information surface 3 of the optical disc sensed by the magnetic field sensors 79. Only a selected few of the outputs 121 is switched on in any such nominal current position. These outputs are controlled by the coil selection and polarity unit in amplitude and polarity in a way suitable to achieve the necessary fine focussing and tracking control. The twelve outputs 121 from the coil selection and polarity unit are connected to twelve corresponding inputs of twelve coil driving circuits provided in a coil driving unit 123, which coil driving circuits operate to amplify the output signals of the coil selection and polarity unit to a level suitable for generating the required magnetic fields in each of the selected coils 75,77 which are active in the current arm position.

Different embodiments may be used with the invention. Referring now to Fig. 10, an embodiment will be described comprising an optical disc apparatus 125 with an optical disc having an information surface 129 and further comprising a supporting assembly 131. The dimensions may be similar to those of Fig. 1-7 while a number of constituent parts are also similar and will therefore not be described in detail. A spindle motor 133 is provided for rotating the optical disc 127. A swing arm assembly 135 comprises a swing arm structure 137 containing a number of optical components like the swing arm assembly 41 of Fig. 2, among which a focussing lens 139 mounted on a lens mount 141. The focussing lens 139 is movable along a focussing axis 143 and the swing arm assembly is pivotable around a swing axis 145 parallel to the focussing axis 143. Leaf springs 147 and 149 are provided for enabling pivoting focussing and scanning movements of the entire rigid swing arm structure 137 respectively, relative to an intermediate part 151 and stationary pivoting means 153 respectively. The movable magnetic scanning means comprise a cylindrical scanning coil 155 having a generally rectangular shape in cross section and having a central opening 157, two pairs of parallel outer side surfaces 159, 161 and 163, 165 respectively, two pairs of inner side surfaces 167, 169 and 171, 173 respectively and outwardly facing axial end surfaces 175, 177 respectively at the axially spaced ends of the coil. The movable focussing means comprising two substantially identical cylindrical focussing coils 179A, 179B respectively having a generally rectangular shape in cross section and having a central opening 181, two pairs of parallel outer side surfaces 183, 185 and 187, 189 respectively, two pairs of inner side surfaces 191, 193 and 195, 197 respectively and outwardly facing axial end surfaces 199, 201 respectively at the axially spaced ends of the coil. The scanning coil 155 has been bonded with its outer side surface 159 against the free end 203 of the swing arm structure 137 in a position with its central axis 205 generally parallel to the scanning movements of the swing arm assembly 135, using suitable means such as adhesive means. Each focussing coil 179A,B has been being bonded at a part of its outwardly facing axial end surface 199 at one side of its central opening 181 against the outer side surface 161 of the scanning coil 155 which is remote from the swing arm structure 137 using suitable bonding means such as adhesive means, the two focussing coils 179A,B being disposed in such a way that the said parts of their outwardly facing axial end surfaces 199 are near to each other, parallel to each other and generally parallel to the scanning movements of the swing arm assembly 135. Combined stationary magnetic means comprise an elongate permanent magnet means 207 facing the movable focussing coils 179A,B and spaced from the focussing coils 179A,B by an air gap, and further comprising a magnetically permeable stator 209 supporting the permanent magnetic means 207 and having a stator part 211 passing through the central opening 157 of the scanning coil 155 with play, the permanent magnet means 207 being magnetically polarized in a radial direction relative to the swing axis 145 of the swing arm assembly 135 and the arrangement being such that a substantially radially directed permanent magnetic field is set up over the air gaps which are present between the scanning coil and the stator part 211 and between the said parts of the focussing coils 179A,B and the stator 209 respectively. In accordance with the invention, the stationary magnetic scanning means 207-211 are rigidly associated with the magnetic motor stator of the spindle motor 133. In accordance with a further feature according the invention, the motor stator of the spindle motor 133, the scanning stator core part 211, the stationary pivoting means 153 and the focussing stator core 209 are integrated into a combined stationary unit. This stationary unit is made from a suitable magnetically permeable material such as soft iron and comprises a temporarily removable part, the part 211, to enable insertion in the central opening 157 of the scanning coil 155. The stationary unit is provided with a supporting beam part having the same thickness as the remaining parts of the stationary unit 209, 211, 213 carrying the stationary pivoting means 153 at its free end and may be comprised of a stack of stator laminations which may be integrated with the motor stator of the spindle motor 133.

While two embodiments of optical disc apparatus 1 and 125 according to the invention have been described, it will be appreciated by persons skilled in the art that the invention is not limited by what has been particularly described and shown above. Many modifications are possible without departing from the inventive concepts herein, all comprising the main feature of the invention, which is that the swing arm structure is rigid from the free end up till at least near the swing axis and the first pivoting means are provided at or near the second pivoting means.

## Claims

1. Optical disc apparatus (1; 125) for recording and/or reproducing information on/from an information surface (3;129) of a rotatable optical disc (5; 127), comprising:
- a supporting assembly (7; 131);
- a spindle motor (9; 133) associated with the supporting assembly (7; 131), having a spindle (11;132) with a spindle axis (13; 134) for rotating the optical disc (5; 127) mounted on the spindle (11;132) about the spindle axis (13; 134);
- optical means (21, 23, 25,27, 29, 33, 37, 39; 139, 141) associated with the supporting assembly (41;131) for scanning an information surface (3; 129) of the said optical disc (5; 127) mounted on the spindle (11;132) and comprising:
- a focussing lens assembly (29, 33; 139, 141) having a movable focussing lens (33; 139) having a focussing axis (35; 143), said focussing lens assembly (29, 33; 139, 141) being movable in a focussing direction for focussing an optical beam (42) on said information surface (3;129) of said optical disc (5; 127);
- a swing arm assembly (41; 135) comprising a generally elongate swing arm structure (43; 137) mounting the said focussing lens assembly (29, 33; 139, 141) at a free end (45), the swing arm assembly (41; 135) being pivotally movable about a swing axis (47; 145) spaced from said free end (45) and directed generally perpendicular to the swing arm structure (43; 137) and generally parallel to the said spindle axis (47; 134) and the said focussing axis (35; 143), such that the swing arm assembly (41; 135) pivotally sweeps a scanning plane generally parallel to the said information surface (3; 129) of the mounted optical disc (5; 127), the swing arm assembly thereby causing said focussing lens assembly (29,33;139,141) to scan over the information surface (3; 129) of the mounted optical disc (5; 127), the swing arm assembly (41; 135) comprising a swing arm structure (43; 137) extending from the free end (45; 203) up till at least near the swing axis (47; 145), first pivoting means (51, 65; 147, 151) for enabling focussing movements of the said focussing lens assembly (29, 33; 139, 141)and second pivoting means (51, 53; 149, 151) for enabling the said pivotal scanning movements of the swing arm assembly (41; 135) and further comprising movable magnetic focussing means (55, 57; 179A,B) provided near the said free end (45; 203; 241) of the swing arm assembly (41; 135) for driving the said focussing lens (33; 139) along said focussing axis (35; 143) to focus the said optical beam (42) on the optical disc information surface (3; 129) and movable magnetic scanning means (55, 57; 155) for driving said swing arm assembly (41; 135; 237) pivotally about the said swing axis (47; 145) for scanning the disc information surface (3; 129) of the information disc (5; 127;
the optical disc apparatus (1; 125) further comprising:
- stationary magnetic focussing means (75, 77; 207) associated with the supporting assembly (7; 131) for magnetically cooperating through an intermediate air gap (611) with the said movable magnetic focussing means (55, 57; 179A,B) for generating a magnetic force vector (F; P) having a vector component parallel to the said focussing axis (35; 143) for driving the focussing lens assembly (29, 33; 139, 141) along said focussing axis (35;143) and stationary magnetic scanning means (75, 77; 207) associated with the supporting assembly (7; 131) for magnetically cooperating through an intermediate air gap (61) with the said movable magnetic scanning means (55, 57; 155) for generating a magnetic torque about the said swing axis (47; 145) for driving the swing arm assembly (41; 135) about said swing axis (47; 145),
- the swing arm structure (41; 135) being rigid from the free end (45) up till at least near the swing axis (47; 145) and the first pivoting means (51,65;147,151) being provided at or near the second pivoting means (51, 53; 149,151) and
- the stationary magnetic focussing means (75, 77; 207) and the stationary magnetic scanning means (75, 77; 207) both being provided near the free end of the swing arm structure,
**characterized in that**:
at least the second pivoting means (51, 53; 149, 151) comprise leaf spring means (65, 53; 147, 149) having a direction of high relative flexibility in the required pivoting direction only.

## Patentansprüche

1. Gerät (1; 125) für optische Platten zum Aufzeichnen und/oder Wiedergeben von Informationen auf eine/von einer Informationsoberfläche (3; 129) einer rotierbaren optischen Platte (5; 127), das Folgendes umfasst:
- eine tragende Baugruppe (7; 131);
- einen der tragenden Baugruppe (7; 131) zugeordneten Spindelmotor (9; 133), der eine Spindel (11; 132) mit einer Spindelachse (13; 134) aufweist, um die optische Platte (5; 127), die an der Spindel (11; 132) angebracht ist, um die Spindelachse (13; 134) rotieren zu lassen;
- der tragenden Baugruppe (7; 131) zugeordnete optische Mittel (21, 23, 25, 27, 29, 33, 37, 39; 139, 141) zum Abtasten einer Informationsoberfläche (3; 129) der an der Spindel (11; 132) angebrachten optischen Platte (5; 127), die Folgendes umfassen:
- eine Fokussierlinsenbaugruppe (29, 33; 139, 141) mit einer beweglichen Fokussierlinse (33; 139), die eine Fokussierachse (35; 143) hat, wobei die Fokussierlinsenbaugruppe (29, 33; 139, 141) in einer Fokussierrichtung beweglich ist, um ein Bündel optischer Strahlen (42) auf die Informationsoberfläche (3; 129) der optischen Platte (5; 127) zu fokussieren;
- eine Schwenkarmbaugruppe (41; 135) mit einer im Allgemeinen lang gestreckten Schwenkarmstruktur (43; 137), die an einem freien Ende (45) die Fokussierlinsenbaugruppe (29, 33; 139, 141) anbringt, wobei die Schwenkarmbaugruppe (41; 135) um eine Schwenkachse (47; 145) drehgelenkig beweglich ist, die vom freien Ende (45) beabstandet und im Allgemeinen senkrecht zu der Schwenkarmstruktur (43; 137) und im Allgemeinen parallel zu der Spindelachse (47; 134) und der Fokussierachse (35; 143) ist, sodass die Schwenkarmbaugruppe (41; 135) eine Abtastebene, die im Allgemeinen parallel zu der Informationsoberfläche (3; 129) der angebrachten optischen Platte (5; 127) ist, schwenkend überstreicht, wodurch die Schwenkarmbaugruppe bewirkt, dass die Fokussierlinsenbaugruppe (29, 33; 139, 141) die Informationsoberfläche (3; 129) der angebrachten optischen Platte (5; 127) abtastet, wobei die Schwenkarmbaugruppe (41; 135) eine Schwenkarmstruktur (43; 137), die sich vom freien Ende (45; 203) bis mindestens in die Nähe der Schwenkachse (47; 145) erstreckt, erste Schwenkmittel (51, 65, 147, 151), um Fokussierbewegungen der Fokussierlinsenbaugruppe (29, 33; 139, 141) zu ermöglichen, und zweite Schwenkmittel (51, 53; 149, 151), um die schwenkenden Abtastbewegungen der Schwenkarmbaugruppe (41; 135) zu ermöglichen, umfasst und ferner bewegliche magnetische Fokussiermittel (55, 57; 179A, B), die in der Nähe des freien Endes (45; 203; 241) der Schwenkarmbaugruppe (41; 135) vorgesehen sind, um die Fokussierlinse (33; 139) entlang der Fokussierachse (35; 143) anzutreiben, um das Bündel optischer Strahlen (42) auf die Informationsoberfläche (3; 129) der optischen Platte zu fokussieren, und bewegliche magnetische Abtastmittel (55, 57; 155), um die Schwenkarmbaugruppe (41; 135; 237) drehgelenkig um die Schwenkachse (47; 145) anzutreiben, um die Platteninformationsoberfläche (3; 129) der Informationsplatte (5; 127) abzutasten, umfasst,
wobei das Gerät (1; 125) für optische Platten ferner umfasst:
- ortsfeste magnetische Fokussiermittel (75, 77; 207), die der tragenden Baugruppe (7; 131) zugeordnet sind, damit sie durch einen dazwischen liegenden Luftspalt (611) hindurch mit den beweglichen magnetischen Fokussiermitteln (55, 57; 179A, B) magnetisch zusammenwirken, um einen Magnetkraftvektor (F; P) zu erzeugen, der eine Vektorkomponente parallel zu der Fokussierachse (35; 143) hat, um die Fokussierlinsenbaugruppe (29, 33; 139, 141) entlang der Fokussierachse (35; 143) anzutreiben, und ortsfeste magnetische Abtastmittel (75, 77; 207), die der tragenden Baugruppe (7; 131) zugeordnet sind, damit sie durch einen dazwischen liegenden Luftspalt (61) hindurch mit den beweglichen magnetischen Abtastmitteln (55, 57; 155) zusammenwirken, um ein magnetisches Drehmoment um die Schwenkachse (47; 145) zum Antreiben der Schwenkarmbaugruppe (41; 135) um die Schwenkachse (47; 145) zu erzeugen,
- wobei die Schwenkarmstruktur (41; 135) vom freien Ende (45) bis mindestens in die Nähe der Schwenkachse (47; 145) biegesteif ist und die ersten Schwenkmittel (51, 65; 147, 151) an oder nahe bei den zweiten Schwenkmitteln (51, 53; 149, 151) vorgesehen sind und
- die ortsfesten magnetischen Fokussiermittel (75, 77; 207) und die ortsfesten magnetischen Abtastmittel (75, 77; 207) beide in der Nähe des freien Endes der Schwenkarmstruktur vorgesehen sind,
**dadurch gekennzeichnet, dass**
zumindest die zweiten Schwenkmittel (51, 53; 149, 151) Blattfedermittel (65, 53; 147, 149) umfassen, die eine Richtung großer Relativbewegungsfreiheit nur in der erforderlichen Schwenkrichtung aufweisen.

## Revendications

1. Appareil pour disque optique (1, 125) pour enregistrer et / ou reproduire des informations sur / venant d'une surface d'informations (3, 129) d'un disque optique qui peut tourner (5, 127), comprenant :
- un assemblage support (7, 131);
- un moteur d'entraînement (9, 133) associé à l'assemblage support (7, 131), ayant un arbre (11, 132) avec un axe d'arbre (13, 134) pour mettre en rotation le disque optique (5, 127) monté sur l'arbre (11, 132) autour de l'axe d'arbre (13, 134);
- un moyen optique (21, 23, 25, 27, 29, 33, 37, 39, 139, 141) associé à l'assemblage support (41, 131) pour balayer une surface d'informations (3, 129) dudit disque optique (5, 127) monté sur l'arbre (11, 132) et comprenant :
- un assemblage lentille de focalisation (29, 33, 139, 141) ayant une lentille de focalisation déplaçable (33, 139) ayant un axe de focalisation (35, 143), ledit assemblage lentille de focalisation (29, 33, 139, 141) étant déplaçable dans une direction de focalisation pour focaliser un faisceau optique (42) sur ladite surface d'informations (3, 129) dudit disque optique (5,127);
- un assemblage formant bras oscillant (41, 135) comprenant une structure formant bras oscillant généralement allongé (43, 137) supportant ledit assemblage lentille de focalisation (29, 33, 139, 141) à une extrémité libre (45), l'assemblage formant bras oscillant (41, 135) étant déplaçable de façon à pouvoir pivoter autour d'un axe d'oscillation (47, 145) espacé de ladite extrémité libre (45) et dirigé de façon généralement perpendiculaire à la structure formant bras oscillant (43, 137) et généralement parallèle audit axe d'arbre (47, 134) et audit axe de focalisation (35, 143), de façon que l'assemblage formant bras oscillant (41, 135) balaye de façon à pouvoir pivoter un plan de balayage généralement parallèle à ladite surface d'informations (3, 129) sur le disque optique supporté (5, 127), l'assemblage formant bras oscillant faisant de ce fait que ledit assemblage de lentille de focalisation (29, 33, 139, 141) balaye la surface d'informations (3, 129) du disque optique supporté (5, 127), l'assemblage formant bras oscillant (41, 135) comprenant une structure formant bras oscillant (43, 137) s'étendant de l'extrémité libre (45, 203) jusqu'au moins près de l'axe d'oscillation (47, 145), un premier moyen de pivotement (51, 65, 147, 151) pour rendre possible des mouvements de focalisation dudit assemblage lentille de focalisation (29, 33, 139, 141) et un deuxième moyen de pivotement (51, 53, 149, 151) pour rendre possible lesdits mouvements de balayage par pivotement de l'assemblage formant bras oscillant (41, 135), et comprenant en outre un moyen magnétique déplaçable de focalisation (55, 57, 179A, B) disposé à proximité de ladite extrémité libre (45,203, 241) de l'assemblage formant bras oscillant (41, 135) pour actionner ledit assemblage lentille de focalisation (33, 139) le long dudit axe de focalisation (35, 143) pour focaliser ledit faisceau optique (42) sur la surface d'informations de disque optique (3, 129), et un moyen magnétique déplaçable de balayage (55, 57, 155) pour actionner ledit assemblage formant bras oscillant (41, 135, 237) par pivotement autour dudit axe d'oscillation (47, 145) pour balayer la surface d'informations de disque (3, 129) du disque d'informations (5, 127);
l'appareil pour disque optique (1, 125) comprenant en outre
- un moyen magnétique stationnaire de focalisation (75, 77, 207) associé à l'assemblage support (7, 131) pour coopérer de façon magnétique au travers d'un entrefer intermédiaire (611) avec ledit moyen magnétique déplaçable de focalisation (55, 57, 179A, B) pour générer un vecteur de force magnétique (F, P) qui a une composante de vecteur parallèle audit axe de focalisation (35, 143) pour actionner l'assemblage lentille de focalisation (29, 33, 139, 141) le long dudit axe de focalisation (35, 143), et un moyen magnétique stationnaire de balayage (75, 77, 207) associé à l'assemblage support (7, 131) pour coopérer de façon magnétique au travers d'un entrefer intermédiaire (61) avec ledit moyen magnétique déplaçable de balayage (55, 57, 155) pour générer un couple magnétique autour dudit axe d'oscillation (47, 145) pour actionner l'assemblage formant bras oscillant (41, 135) autour dudit axe d'oscillation (47, 145),
- la structure formant bras oscillant (41, 135) étant rigide à partir de l'extrémité libre 45 jusqu'à proximité au moins de l'axe d'oscillation (47, 145), et le premier moyen de pivotement (51, 65, 147, 151) étant disposé à ou à proximité du deuxième moyen de pivotement (51, 53, 149, 151) et
- le moyen magnétique stationnaire de focalisation (75, 77, 207) et le moyen magnétique stationnaire de balayage (75, 77, 207) étant tous deux disposés près de l'extrémité libre de la structure formant bras oscillant,
**caractérisé en ce que**
au moins le deuxième moyen de pivotement (51, 53, 149, 151) comprend des moyens ressort à lame (65, 53, 147,149) ayant une direction de grande flexibilité relative seulement dans la direction de pivotement requise.
